# EUROPEAN PATENT SPECIFICATION

(11) **EP 2 795 744 B1**
(45) Date of publication and mention of the grant of the patent: **16.08.2017**
(21) Application number: 11819119.6
(22) Date of filing: 22.12.2011
(51) Int. Cl.: F16C 19/22, H01R 39/64

(54) **ELECTRICAL CONNECTION DEVICE**
ELEKTRISCHE VERBINDUNGSVORRICHTUNG
DISPOSITIF DE CONNEXION ÉLECTRIQUE

(30) Priority: 20.12.2011 IT VR20110227
(43) Date of publication of application: 29.10.2014
(73) Proprietor: H.B.S. S.r.l., 46040 Monzambano (Mantova) (IT)
(72) Inventor: BOMPIERI, Ezio, I-46040 Monzambano (IT)
(74) Representative: Lissandrini, Marco
(86) International application number: PCT/IT2011/000413
(87) International publication number: WO 2013/093946

(56) References cited:
- WO-A1-2006/014199
- WO-A1-2010/048957
- WO-A1-2011/130969
- GB-A- 191 225 605
- US-A- 1 503 849
- US-A1- 2004 251 769
- US-A1- 2009 148 093

## Description

### Technical Field

This invention relates to an electrical connection device.

More specifically, this invention relates to an electrical connection device of the rotary type, generally known as "rotary joint", designed to electrically connect two elements rotatable relative to each other.

### Background Art

As is known, the rotary joints are mainly used in movable apparatus, such as, for example, the rotary control cabin machines, for transmitting the current between the control cabin and the mechanical actuators mounted on a fixed part of the machine. These devices generally consist of a box-shaped portion, inside of which a tubular portion is partly inserted. The box-shaped portion and the tubular portion are coupled using suitable movement means, such as roller bearings, to make the two portions rotary relative to each other. That way, at least one of the two portions remains stationary whilst the other is free to rotate about a respective longitudinal axis.

Other kinds of electrical connection devices are implemented in electrical machines (for example motors) described in documents: US 2004/251769, WO 2010/048957.

The box-shaped portion forms internally a compartment for housing a respective connector designed for coupling to electrical terminals (electrical cables). In this situation, the cables, passing through a suitable opening made on the box-shaped portion, are coupled to the electrical connector which is integral with the inner walls of the housing compartment.

The tubular portion has an end inserted in the compartment and is also equipped with a respective electrical connector designed for coupling to electrical cables passing inside the tubular portion.

Advantageously, the connectors of the tubular portion and of the box-shaped portion are in contact with each other, for guaranteeing the electrical connection, nevertheless allowing a relative movement between the portions. The electrical connection generally occurs using suitable sliding contacts anchored to the box-shaped portion and joined to the electrical cables passing through the containment compartment. Each contact is rested on a respective disc coaxial to the tubular portion and activated electrically by the respective electrical cable passing inside the tubular portion.

This guarantees the passage of current between the respective connectors.

The box-shaped portion is generally made in at least two parts, suitably connected by joints (preferably flat) connected together by screws (hereafter called "screw joints") so as to form the aforementioned containment compartment. Preferably, the containment compartment is not completely sealed so as to allow the escape of any gas to the outside of the box-shaped body. In effect, in the case in which rotating joints are used in hazardous environments, that is to say, in the presence of inflammable gas (hydrogen and/or acetylene), these gases may penetrate inside the containment compartment. For this reason, in order to prevent the box-shaped portion exploding (if hermetically sealed), slots are made for release of the combustion gas.

In other words, if there is an explosion inside the box-shaped portion, the combustion gases generated in the containment compartment are released outside through the aforementioned slots. The slots are made between the parts which make up the box-shaped portion and in particular at the screw joints. In this situation, the two parts are not coupled with a hermetic seal but form the aforementioned slots for passage of the gases.

However, the electrical connection devices described above have major drawbacks.

A first drawback is due to the fact that in the case of combustion inside the box-shaped portion, generated by the aforementioned inflammable gases which penetrate inside the containment compartment, there is the risk of the burnt gases which escape through the slots risk triggering further explosions also outside the rotary joint.

This drawback is mainly linked to the high temperatures of the burnt gases which escape from the box-shaped portion which, due to their high temperature, lead to the risk of further explosions.

Another major drawback is due to the dimensions of the tubular portion which may only contain electrical cables of predetermined dimensions.

In effect, given the need to maintain the entire rotary joint with compact dimensions, the use of electrical cables with large dimensions in a transversal cross-section necessarily results in the replacement of the entire device suitably sized for allowing passage of the cables in the tubular portion.

### Disclosure of the Invention

In this context, the aim of this invention is to provide an electrical connection device which is free of the above mentioned drawbacks.

More specifically, the aim of this invention is to make an electrical connection device which is able to prevent any explosions in the surrounding environment.

In more detail, the aim of this invention is to make a device which is able to cool the burnt gases escaping from the device.

Another aim of this invention is to provide a connection device which is versatile and may be used with electrical cables of any size, without necessarily replacing the device entirely.

The technical purpose indicated and the aim specified are substantially achieved by an electrical connection device with the technical features described in one or more of the appended claims.

### Brief Description of the Drawings

Further features and advantages of this invention are more apparent in the non-limiting description which follows of a preferred embodiment of an electrical connection device as illustrated in the accompanying drawings, in which:
- Figure 1 is a longitudinal cross-section of the connection device according to this invention; and
- Figure 2 is a perspective, exploded view of the device of Figure 1.

### Detailed Description of the Preferred Embodiments of the Invention

With reference to the accompanying drawings, the numeral 1 denotes in its entirety an electrical connection device according to this invention.

More specifically, the device 1 comprises a box-shaped body 2 forming internally a respective containment compartment 3 of a first electrical connector 4.

The first electrical connector 4 consists of a series of sliding contacts 5, each of which is electrically connected to a respective electrical cable (not illustrated as not forming part of this invention), using electrical coupling systems of known type and therefore not described further.

The electrical connections extend inside the box-shaped body 2 through a series of openings 6 made on the box-shaped body 2.

The first electrical connector 4 is also integral with the box-shaped body 2 and anchored to the inner surface forming the containment compartment 4.

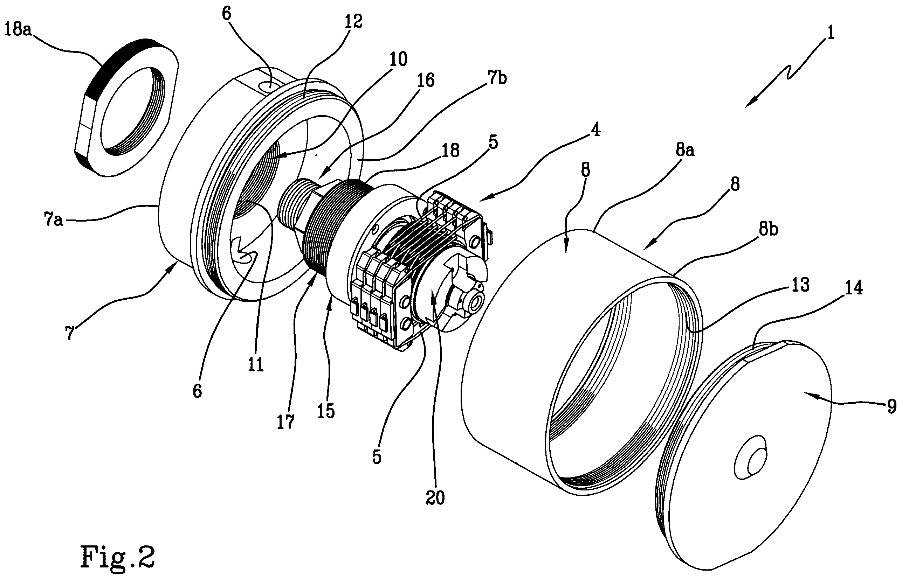

Advantageously, with particular reference to Figure 2 it should be noted that the box-shaped body 2 has a substantially cylindrical shape and it consists of a cylindrical portion 7, an annular body 8 and a closing element 9.

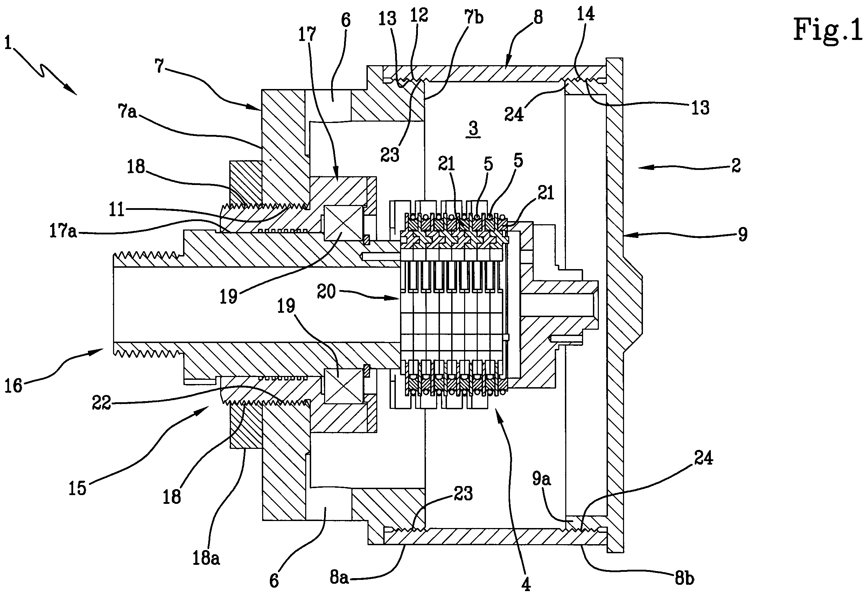

In more detail, the cylindrical portion 7 has a first end 7a on which an opening 10 is made, and a second end 7b, opposite the first end, having a circular profile. The opening 10 has an inner threaded surface 11 better visible in the cross-section of Figure 1. Similarly, the second end 7b of the cylindrical portion 7 also has a partly threaded inner surface 12.

The annular body 8 has a substantially circular shape and forms a first end 8a coaxially coupled with the second end 7b of the cylindrical portion 7, and a second end 8b opposite the first end 8a.

More specifically, it should be noted that the annular body 8 has respective inner threaded surfaces 13 at the first and the second end 8a, 8b. In this way, the threaded outer surface 12 of the second end 7b of the cylindrical portion 7 is screwed into the inner threaded surface 13 of the first end 8a of the annular body 8 (Figure 1).

The closing end 9 is substantially disc-shaped forming a plane profile, and it is coupled with the second end 8b of the annular body 8 for closing the box-shaped body 2 forming the aforementioned housing compartment 3.

More specifically, the closing element 9 has a circular peripheral edge 9a engaged with the second end 8b of the annular body 8.

The peripheral edge 9a of the closing element 9 has a partly threaded outer surface 14 and screwed into the inner threaded surface 13 of the second end 8b of the annular body 8.

The device 1 also comprises connection means 15 interposed between the opening 10 made in the cylindrical portion 7 and a hollow element 16 for rotatably coupling the hollow element 16 to the box-shaped body 2.

More specifically, the connection means 15 have a tubular sleeve 17 having a partly threaded outer cylindrical surface 18, designed for being screwed into the inner threaded surface 11 of the opening 10.

In this way, the sleeve 17 is engaged inside the opening 10 and is integral with the box-shaped body 2. Preferably, for stably anchoring the sleeve 17 to the box-shaped body 2, a threaded ring 18a is also screwed on the threaded outer cylindrical surface 18 of the sleeve 17.

Moreover, the sleeve 17 has an inner duct 17a for housing the hollow element 16 having dimensions corresponding to the dimensions of the hollow element 16.

Also, the sleeve 17 has a series of roller bearings 19 at the aforementioned inner duct 17a for making the hollow element 16 rotatably associated inside the sleeve 17.

Preferably, the sleeve 17 has a two rings of roller bearings 19 at the aforementioned inner duct 17a positioned alongside and coaxial with each other.

In this situation it should be noted that the hollow element 16 has an outer cylindrical surface in sliding contact with an inner cylindrical surface of the sleeve 17. Advantageously, the sleeve 17 has a variable breadth of the inner duct 17a as a function of the dimensions of the hollow element 16.

For this reason, for the case in which a hollow element 16 having different dimensions must be used, the box-shaped body 2 is maintained and only the sleeve 17 is replaced.

With reference to Figure 1, it should be noted that the hollow element 16 is partly inserted in the containment compartment 3 and it is equipped with a second electrical connector 20 rotatably coupled to the first electrical connector 4. The hollow element 16 has a tubular shape for allowing the passage inside of respective electrical cables (not illustrated as they do not form part of this invention).

The second electrical connector 20 has a series of annular discs 21 coaxially engaged with each other and keyed to an end of the hollow element 16 positioned in the containment compartment 3. Each disc 21 is electrically connected to a respective electrical cable and has an outer surface associated with the aforementioned contacts 5.

In this way, during the relative rotation between the hollow element 16 and the box-shaped body 2, the contacts 5 slide on the discs 21 guaranteeing a passage of current between the cables inserted in the box-shaped body 2 and the cables inserted in the hollow element 16.

Advantageously, the device 1 also comprises at least a first transit channel 22 for placing the containment compartment 3 in fluid communication with the outside environment.

The first transit channel 22 is preferably formed between the connection means 15 and the opening 10 of the box-shaped body 2 and has an undulating profile for forming a path for cooling a fluid flowing out of the containment compartment 3.

In other words, the first transit channel 22 allows the escape of fluids, such as, for example, gas from the containment compartment 3 to the outside. The undulating path which defines the channel 22 leads to an extended passage of the gas flowing out of the compartment 3 which is cooled after the long period of time the gas is inside the channel 22.

Looking in more detail, the first transit channel 22 is formed between the thread of the outer cylindrical surface 18 of the sleeve 17 and the thread of the inner surface 11 of the opening 10.

Advantageously, the device 1 has at least a second transit channel 23 for placing the containment compartment 3 in fluid communication with the outside environment.

As illustrated in Figure 1, the second transit channel 23 is made between the second end 7b of the cylindrical portion 7 and the first end 8a of the annular body 8.

More specifically, the second transit channel 23 is formed between the thread of the outer surface 12 of the cylindrical portion 7 and the thread of the inner surface 13 of the annular body 8. For this reason, the second transit channel 23 also has an undulating profile for forming a second path for cooling a fluid flowing out of the containment compartment 3.

Preferably, the device 1 also comprises at least a third transit channel 24 for placing the containment compartment 3 in fluid communication with the outside environment. The third transit channel 24 is formed between the peripheral edge 9a of the closing element 9 and the second end 8b of the annular body 8.

In this case, too, the third transit channel 24 has an undulating profile for forming a third path for cooling a fluid flowing out of the containment compartment. Also in this case, the third transit channel 24 is made between the thread of the peripheral edge 14 and the thread of the inner surface 13 of the annular body 8.

The three transit channels 22, 23, 24 therefore allow the escape of the burnt gases along the predetermined paths having a particular undulating profile. In this way, in the case of an explosion inside the box-shaped body, the extremely hot gases escape along the undulating paths formed by the various threads, dwelling for a prolonged period of time between the threads themselves. This dwelling allows the gases to be cooled, returning them to the outside ambient temperature. Consequently, any triggering of explosions due to the high temperature of the burnt gases inside the box-shaped body 2 is avoided.

Another major advantage is provided by the presence of the sleeve 17 which can be screwed to the box-shaped body 2 which is replaced if a different sized hollow element must be used. In this way, the device 1 is adapted to electrical cables of different sizes by only replacing the hollowing element 16 and the respective sleeve 17 without replacing the entire box-shaped body 2.

## Claims

1. Electrical connection device comprising:
- a box-shaped body (2) forming a containment compartment (3) and having a first electrical connector (4) positioned inside the containment compartment (3) and integral with the box-shaped body (2); said first electrical connector (4) being designed to be coupled with first electrical cables;
- a hollow element (16), partly inserted in the containment compartment (3) having a second electrical connector (20) rotatably coupled to the first electrical connector (4); said hollow element (16) having a tubular shape and being configured for allowing the passage inside of respective second electrical cables; said hollow element (16) having an end inserted in the containment compartment (3) and equipped with the second electrical connector (20); said second electrical connector (4) being configured to be coupled to said second electrical cables passing inside the hollow element (16);
said first electrical connector (4) and second electrical connector (20) being in contact with each other, for guaranteeing the electrical connection; said electrical connection occurring through sliding contacts (5) anchored to the box-shaped body (2);
- connection means (15) are interposed between an opening (10) made in the box-shaped body (2) and the hollow element (16) for rotatably coupling the hollow element (16) to the box-shaped body (2); and at least a first transit channel (22) allowing the escape of fluids from the containment compartment (3) to the outside;
**characterised in that** the first transit channel (22) has an undulating profile for forming a path for cooling a fluid flowing out of the containment compartment (3).

2. The device according to the preceding claim, **characterised in that** the first transit channel (22) is formed between the connection means (15) and the opening (10) of the box-shaped body (2).

3. The device according to the preceding claim, **characterised in that** the connection means (15) comprise a tubular sleeve (17) having a partly threaded outer cylindrical surface (18) and screwed to a threaded inner surface (11) of the opening (10) of the box-shaped body (2); the first transit channel (22) being formed between the thread of the outer cylindrical surface (18) of the sleeve (17) and the thread of the inner surface (11) of the opening (10).

4. The device according to any of the foregoing claims, **characterised in that** it comprises at least a second transit channel (23) for placing the containment compartment (3) in fluid communication with the outside environment; the second transit channel (23) having an undulating profile for forming a second path for cooling a fluid flowing out of the containment compartment (3).

5. The device according to the preceding claim, **characterised in that** the box-shaped body (2) comprises:
a cylindrical portion (7), having a first device (7a) on which the opening (10) is formed and a second end (7b) opposite the first end (7a) having a circular profile;
an annular body (8), having a first end (8a) coaxially coupled with the second end (7b) of the cylindrical portion (7) and a second end (8b) opposite the first end (8a);
the second transit channel (23) is formed between the second end (7b) of the cylindrical portion (7) and the first end (8a) of the annular body (8).

6. The device according to the preceding claim, **characterised in that** the second end (7b) of the cylindrical portion (7) has a partly threaded outer surface (12) and is screwed to a threaded inner surface (13) of the first end (8a) of the annular body (8); the second transit channel (23) being formed between the thread of the outer surface (12) of the cylindrical portion (7) and the thread of the inner surface (12) of the annular body (8).

7. The device according to any of the foregoing claims, **characterised in that** it comprises at least a third transit channel (24) for placing the containment compartment (3) in fluid communication with the outside environment; the third transit channel (24) having an undulating profile for forming a third path for cooling a fluid flowing out of the containment compartment (3).

8. The device according to the preceding claim when dependent on claim 5 or 6, **characterised in that** the box-shaped body (2) also comprises a substantially disc-shaped closing element (9) having a circular peripheral edge (9a) coupled with the second end (8b) of the annular body (8); the third transit channel (24) being formed between the peripheral edge (9a) of the closing element (9) and the second end (8b) of the annular body (8).

9. The device according to the preceding claim, **characterised in that** the peripheral edge (9a) of the closing element (9) has a partly threaded outer surface (14) and is screwed to a threaded inner surface (13) of the second end (8b) of the annular body (8); the third transit channel (24) being formed between the thread (14) of the outer surface (9a) of the peripheral edge (9a) and the thread of the inner surface (13) of the annular body (8).

10. The device according to claim 3, **characterised in that** the hollow element (16) has a substantially tubular shape and that the tubular sleeve (17) has an inner duct (17a) for housing the hollow element (16) having dimensions corresponding to the dimensions of the hollow element (16).

11. The device according to the preceding claim, **characterised in that** the hollow element (16) has an outer cylindrical surface in sliding contact with an inner cylindrical surface of the sleeve (17); the sleeve (17) having a variable breadth of the inner duct (17a) as a function of the dimensions of the hollow element (16).

12. The device according to any of the foregoing claims **characterised in that** the box-shaped body (2) presents a series of openings (6) for the passage of electric cables inside the box-shaped body (2) which are designed for coupling to the first electrical connector (4); said hollow element (16) having a substantially tubular shape for allowing the passage inside of respective electric cables with which the second electrical connector (20) is designed to be coupled.

13. The device according to any of the foregoing claims **characterised in that** the second electrical connector (20) has a series of annular discs (21) coaxially engaged with each other and keyed to an end of the hollow element (16) positioned in the containment compartment (3); each disc (21) being electrically connected to a respective electrical cable and having an outer surface associated with the said contacts (5).

## Patentansprüche

1. Elektrische Verbindungsvorrichtung, umfassend:
- einen kastenförmigen Körper (2), bildend ein Gehäuseabteil (3) und aufweisend einen ersten elektrischen Verbinder (4), der im Gehäuseabteil (3) positioniert und fest mit dem kastenförmigen Körper (2) verbunden ist, wobei dieser erste elektrische Verbinder (4) ausgestaltet ist, um mit den ersten elektrischen Kabeln gekuppelt zu werden;
- ein hohles Element (16), das teilweise in das Gehäuseabteil (3) eingefügt ist, aufweisend einen zweiten elektrischen Verbinder (20), der drehbar mit dem ersten elektrischen Verbinder (4) gekuppelt ist, wobei das hohle Element (16) eine rohrförmige Form aufweist und ausgelegt ist, um die Durchführung in jeweiligen zweiten elektrischen Kabeln zu erlauben, wobei das hohle Element (16) ein Ende aufweist, das in das Gehäuseabteil (3) eingefügt und mit dem zweiten elektrischen Verbinder (20) ausgestattet ist, wobei der zweite elektrische Verbinder (4) ausgelegt ist, um mit den zweiten elektrischen Kabeln, die durch das hohle Element (16) geführt werden, gekuppelt zu werden,
wobei der erste elektrische Verbinder (4) und der zweite elektrische Verbinder (20) in Kontakt miteinander sind, um die elektrische Verbindung zu garantieren, wobei die elektrische Verbindung durch einen Schiebekontakt (5) hergestellt wird, der am kastenförmigen Körper (2) verankert ist;
- Verbindungsmittel (15), die zwischen einer Öffnung (10), die im kastenförmigen Körper (2) ausgebildet ist, und dem hohlen Element (16) eingesetzt sind, um das hohle Element (16) drehbar mit dem kastenförmigen Körper (2) zu kuppeln, und mindestens einen ersten Durchgangskanal (22), der das Entweichen von Medien aus dem Gehäuseabteil (3) zur Außenseite erlaubt,
**dadurch gekennzeichnet, dass** der erste Durchgangskanal (22) ein gewelltes Profil aufweist, um einen Weg zum Kühlen eines Mediums zu bilden, das aus dem Gehäuseabteil (3) strömt.

2. Vorrichtung nach dem vorhergehenden Anspruch, **dadurch gekennzeichnet, dass** der erste Durchgangskanal (22) zwischen den Verbindungsmitteln (15) und der Öffnung (10) des kastenförmigen Körpers (2) ausgebildet ist.

3. Vorrichtung nach dem vorhergehenden Anspruch, **dadurch gekennzeichnet, dass** die Verbindungsmittel (15) eine rohrförmige Hülse (17) umfassen, aufweisend eine teilweise mit einem Gewinde versehene außenseitige zylindrische Oberfläche (18), verschraubt mit einer innenseitigen, mit einem Gewinde versehenen Oberfläche (11) der Öffnung (10) des kastenförmigen Körpers (2), wobei der erste Durchgangskanal (22) zwischen dem Gewinde der außenseitigen zylindrischen Oberfläche (18) der Hülse (17) und dem Gewinde der innenseitigen Oberfläche (11) der Öffnung (10) ausgebildet ist.

4. Vorrichtung nach einem der vorhergehenden Ansprüche, **dadurch gekennzeichnet, dass** sie mindestens einen zweiten Durchgangskanal (23) umfasst, um das Gehäuseabteil (3) mit der äußeren Umgebung in Fluidkommunikation zu bringen, wobei der zweite Durchgangskanal (23) ein gewelltes Profil aufweist, um einen zweiten Weg zum Kühlen eines Mediums zu bilden, das aus dem Gehäuseabteil (3) strömt.

5. Vorrichtung nach dem vorhergehenden Anspruch, **dadurch gekennzeichnet, dass** der kastenförmige Körper (2) umfasst: einen zylindrischen Abschnitt (7), aufweisend eine erste Vorrichtung (7a), auf der die Öffnung (10) ausgebildet ist, und ein zweites Ende (7b), das gegenständig zum ersten Ende (7a) angeordnet ist, aufweisend ein kreisförmiges Profil; einen ringförmigen Körper (8), aufweisend ein erstes Ende (8a), das koaxial mit dem zweiten Ende (7b) des zylindrischen Abschnitts (7) gekuppelt ist, und ein zweites Ende (8b), das gegenständig zum ersten Ende (8a) angeordnet ist, wobei der zweite Durchgangskanal (23) zwischen dem zweiten Ende (7b) des zylindrischen Abschnitts (7) und dem ersten Ende (8a) des ringförmigen Abschnitts (8) ausgebildet ist.

6. Vorrichtung nach dem vorhergehenden Anspruch, **dadurch gekennzeichnet, dass** das zweite Ende (7b) des zylindrischen Abschnitts (7) eine teilweise mit einem Gewinde versehene außenseitige Oberfläche (12) aufweist und mit einer innenseitigen, mit einem Gewinde versehenen Oberfläche (13) des ersten Endes (8a) des ringförmigen Körpers (8) verschraubt ist, wobei der zweite Durchgangskanal (23) zwischen dem Gewinde der außenseitigen Oberfläche (12) des zylindrischen Abschnitts (7) und dem Gewinde der innenseitigen Oberfläche (12) des ringförmigen Körpers (8) ausgebildet ist.

7. Vorrichtung nach einem der vorhergehenden Ansprüche, **dadurch gekennzeichnet, dass** sie mindestens einen dritten Durchgangskanal (24) umfasst, um das Gehäuseabteil (3) mit der äußeren Umgebung in Fluidkommunikation zu bringen, wobei der dritte Durchgangskanal (24) ein gewelltes Profil aufweist, um einen dritten Weg zum Kühlen eines Mediums zu bilden, das aus dem Gehäuseabteil (3) strömt.

8. Vorrichtung nach dem vorhergehenden Anspruch, wenn abhängig von Anspruch 5 oder 6, **dadurch gekennzeichnet, dass** der kastenförmige Körper (2) auch ein im Wesentlichen scheibenförmiges Verschlusselement (9) umfasst, aufweisend eine kreisförmige umfangsseitige Kante (9a), gekuppelt mit dem zweiten Ende (8a) des ringförmigen Körpers (8),
wobei der dritte Durchgangskanal (24) zwischen der umfangsseitigen Kante (9a) des Verschlusselements (9) und dem zweiten Ende (8b) des ringförmigen Körpers (8) ausgebildet ist.

9. Vorrichtung nach dem vorhergehenden Anspruch, **dadurch gekennzeichnet, dass** die umfangsseitige Kante (9a) des Verschlusselements (9) eine teilweise mit einem Gewinde versehene außenseitige Oberfläche (14) aufweist und mit einer innenseitigen, mit einem Gewinde versehenen Oberfläche (13) des zweiten Endes (8b) des ringförmigen Körpers (8) verschraubt ist, wobei der dritte Durchgangskanal (24) zwischen dem Gewinde (14) der außenseitigen Oberfläche (9a) der umfangsseitigen Kante (9a) und dem Gewinde der innenseitigen Oberfläche (13) des ringförmigen Körpers (8) ausgebildet ist.

10. Vorrichtung nach Anspruch 3, **dadurch gekennzeichnet, dass** das hohle Element (16) eine im Wesentlichen rohrförmige Form aufweist und die rohrförmige Hülse (17) eine interne Leitung (17a) zur Unterbringung des hohlen Elements (16) aufweist, aufweisend Abmessungen, die den Abmessungen des hohlen Elements (16) entsprechen.

11. Vorrichtung nach dem vorhergehenden Anspruch, **dadurch gekennzeichnet, dass** das hohle Element (16) eine außenseitige zylindrische Oberfläche aufweist, die in Schiebekontakt mit einer innenseitigen zylindrischen Oberfläche der Hülse (17) ist, wobei die Hülse einen variablen Umfang der internen Leitung (17a) aufweist, der von den Abmessungen des hohlen Elements (16) abhängig ist.

12. Vorrichtung nach einem der vorhergehenden Ansprüche, **dadurch gekennzeichnet, dass** der kastenförmige Körper (2) eine Reihe von Öffnungen (6) für die Durchführung elektrischer Kabel im kastenförmigen Körper (2) besitzt, die für die Kupplung mit dem ersten elektrischen Verbinder (4) ausgelegt sind, wobei das hohle Element (16) eine im Wesentlichen rohrförmige Form aufweist, um die innenseitige Durchführung jeweiliger elektrischer Kabel zu ermöglichen, wobei der zweite elektrische Verbinder (20) ausgestaltet ist, um mit diesen gekuppelt zu werden.

13. Vorrichtung nach einem der vorhergehenden Ansprüche, **dadurch gekennzeichnet, dass** der zweite elektrische Verbinder (20) eine Reihe von ringförmigen Scheiben (21) aufweist, die koaxial ineinandergreifen und an einem Ende des hohlen Elements (16) verkeilt sind, positioniert im Gehäuseabteil (3), wobei eine jede Scheibe (21) elektrisch mit einem jeweiligen elektrischen Kabel verbunden ist und eine außenseitige Oberfläche aufweist, die mit den Kontakten (5) assoziiert ist.

## Revendications

1. Dispositif de connexion électrique comprenant :
- un corps en forme de boîte (2) formant un compartiment de contenance (3) et comportant un premier connecteur électrique (4) positionné à l'intérieur du compartiment de contenance (3) et solidaire du corps en forme de boîte (2) ; ledit premier connecteur électrique (4) étant conçu pour être couplé à des premiers câbles électriques ;
- un élément creux (16), partiellement inséré dans le compartiment de contenance (3) comportant un second connecteur électrique (20) couplé de façon rotative au premier connecteur électrique (4) ; ledit élément creux (16) ayant une forme tubulaire et étant configuré pour permettre le passage à l'intérieur de seconds câbles électriques respectifs ; ledit élément creux (16) comportant une extrémité insérée dans le compartiment de contenance (3) et équipée du second connecteur électrique (20) ; ledit second connecteur électrique (4) étant configuré pour être couplé auxdits seconds câbles électriques passant à l'intérieur de l'élément creux (16) ;
lesdits premier connecteur électrique (4) et second connecteur électrique (20) étant réciproquement en contact pour assurer la connexion électrique ; ladite connexion électrique ayant lieu par des contacts coulissants (5) fixés au corps en forme de boîte (2) ;
- des moyens de connexion (15) sont interposés entre une ouverture (10) réalisée dans le corps en forme de boîte (2) et l'élément creux (16) pour coupler de façon rotative l'élément creux (16) au corps en forme de boîte (2) ; et au moins un premier canal de transit (22) permettant à des fluides de s'échapper du compartiment de contenance (3) vers l'extérieur ;
**caractérisé en ce que** le premier canal de transit (22) a un profil ondulé pour former une voie de passage pour refroidir un fluide s'écoulant hors du compartiment de contenance (3).

2. Dispositif selon la revendication précédente, **caractérisé en ce que** le premier canal de transit (22) est formé entre les moyens de connexion (15) et l'ouverture (10) du corps en forme de boîte (2).

3. Dispositif selon la revendication précédente, **caractérisé en ce que** les moyens de connexion (15) comprennent un manchon tubulaire (17) comportant une surface extérieure cylindrique partiellement filetée (18) et vissée à une surface intérieure filetée (11) de l'ouverture (10) du corps en forme de boîte (2) ; le premier canal de transit (22) étant formé entre le filetage de la surface extérieure cylindrique (18) du manchon (17) et le filetage de la surface intérieure (11) de l'ouverture (10).

4. Dispositif selon l'une quelconque des revendications précédentes, **caractérisé en ce qu'**il comprend au moins un second canal de transit (23) pour placer le compartiment de contenance (3) en communication fluidique avec l'environnement extérieur ; le second canal de transit (23) ayant un profil ondulé pour former une seconde voie de passage pour refroidir un fluide s'écoulant hors du compartiment de contenance (3) .

5. Dispositif selon la revendication précédente, **caractérisé en ce que** le corps en forme de boîte (2) comprend : une partie cylindrique (7) comportant un premier dispositif (7a) sur lequel est formée l'ouverture (10) et une seconde extrémité (7b) opposée à la première extrémité (7a) ayant un profil circulaire ; un corps annulaire (8) comportant une première extrémité (8a) couplée coaxialement à la seconde extrémité (7b) de la partie cylindrique (7) et une seconde extrémité (8b) opposée à la première extrémité (8a) ;
le second canal de transit (23) est formé entre la seconde extrémité (7b) de la partie cylindrique (7) et la première extrémité (8a) du corps annulaire (8).

6. Dispositif selon la revendication précédente, **caractérisé en ce que** la seconde extrémité (7b) de la partie cylindrique (7) comporte une surface extérieure partiellement filetée (12) et est vissée à une surface intérieure filetée (13) de la première extrémité (8a) du corps annulaire (8) ; le second canal de transit (23) étant formé entre le filetage de la surface extérieure (12) de la partie cylindrique (7) et le filetage de la surface intérieure (12) du corps annulaire (8).

7. Dispositif selon l'une quelconque des revendications précédentes, **caractérisé en ce qu'**il comprend au moins un troisième canal de transit (24) pour placer le compartiment de contenance (3) en communication fluidique avec l'environnement extérieur ; le troisième canal de transit (24) ayant un profil ondulé pour former une troisième voie de passage pour refroidir un fluide s'écoulant hors du compartiment de contenance (3).

8. Dispositif selon la revendication précédente lorsqu'elle dépend des revendications 5 ou 6, **caractérisé en ce que** le corps en forme de boîte (2) comprend aussi un élément de fermeture (9) substantiellement en forme de disque comportant un bord périphérique circulaire (9a) couplé à la seconde extrémité (8b) du corps annulaire (8) ;
le troisième canal de transit (24) étant formé entre le bord périphérique (9a) de l'élément de fermeture (9) et la seconde extrémité (8b) du corps annulaire (8).

9. Dispositif selon la revendication précédente, **caractérisé en ce que** le bord périphérique (9a) de l'élément de fermeture (9) comporte une surface extérieure partiellement filetée (14) et est vissé à une surface intérieure filetée (13) de la seconde extrémité (8b) du corps annulaire (8) ; le troisième canal de transit (24) étant formé entre le filetage (14) de la surface extérieure (9a) du bord périphérique (9a) et le filetage de la surface intérieure (13) du corps annulaire (8).

10. Dispositif selon la revendication 3, **caractérisé en ce que** l'élément creux (16) possède une forme substantiellement tubulaire et **en ce que** le manchon tubulaire (17) comporte un conduit interne (17a) pour loger l'élément creux (16) ayant des dimensions correspondant aux dimensions de l'élément creux (16).

11. Dispositif selon la revendication précédente, **caractérisé en ce que** l'élément creux (16) comporte une surface extérieure cylindrique en contact coulissant avec une surface intérieure cylindrique du manchon (17) ; le manchon (17) ayant une largeur variable du conduit intérieur (17a) en fonction des dimensions de l'élément creux (16).

12. Dispositif selon l'une quelconque des revendications précédentes, **caractérisé en ce que** le corps en forme de boîte (2) présente une série d'ouvertures (6) pour le passage de câbles électriques à l'intérieur du corps en forme de boîte (2) étant conçus pour se coupler au premier connecteur électrique (4) ; ledit élément creux (16) ayant une forme substantiellement tubulaire pour permettre le passage à l'intérieur de câbles électriques respectifs auxquels le second connecteur électrique (20) est conçu pour être couplé.

13. Dispositif selon l'une quelconque des revendications précédentes, **caractérisé en ce que** le second connecteur électrique (20) comporte une série de disques annulaires (21) se mettant en prise coaxialement réciproquement et calés à une extrémité de l'élément creux (16) positionné dans le compartiment de contenance (3) ; chaque disque (21) étant électriquement connecté à un câble électrique respectif et comportant une surface extérieure associée auxdits contacts (5).
